Europäisches Patentamt

European Patent Office

Office européen des brevets

(19)

(11) **EP 1 509 879 B1**

(12) **EUROPEAN PATENT SPECIFICATION**

(45) Date of publication and mention
of the grant of the patent:
**28.12.2005 Bulletin 2005/52**

(21) Application number: **03727782.9**

(22) Date of filing: **20.05.2003**

(51) Int Cl.⁷: **G06T 1/00**

(86) International application number:
**PCT/IB2003/002155**

(87) International publication number:
**WO 2003/098546 (27.11.2003 Gazette 2003/48)**

(54) **TAMPER-RESISTANT VISUAL ENCRYPTION METHOD AND DEVICE**

METHODE UND VERFAHREN ZUR FÄLSCHUNGSRESISTENTEN VISUELLEN
VERSCHLÜSSELUNG

PROCEDE ET DISPOSITIF DE CODAGE VISUEL INVIOLABLE

(84) Designated Contracting States:
**AT BE BG CH CY CZ DE DK EE ES FI FR GB GR
HU IE IT LI LU MC NL PT RO SE SI SK TR**

(30) Priority: **21.05.2002 EP 02076980
15.11.2002 EP 02079766**

(43) Date of publication of application:
**02.03.2005 Bulletin 2005/09**

(73) Proprietor: **Koninklijke Philips Electronics N.V.
5621 BA Eindhoven (NL)**

(72) Inventors:
• **KEVENAAR, Thomas, A., M.
NL-5656 AA Eindhoven (NL)**
• **SCHRIJEN, Geert, J.
NL-5656 AA Eindhoven (NL)**
• **TUYLS, Pim, T.
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**FR-A- 2 812 959**

• **CHIN-CHEN CHANG ET AL: "A new scheme for
sharing secret color images in computer
network" PARALLEL AND DISTRIBUTED
SYSTEMS, 2000. PROCEEDINGS. SEVENTH
INTERNATIONAL CONFERENCE ON IWATE,
JAPAN 4-7 JULY 2000, LOS ALAMITOS, CA,
USA,IEEE COMPUT. SOC, US, 4 July 2000
(2000-07-04), pages 21-27, XP010504379 ISBN:
0-7695-0568-6**
• **NAOR M ET AL: "Visual cryptography"
ADVANCES IN CRYPTOLOGY. EUROCRYPT,
XX, XX, 12 May 1994 (1994-05-12), pages 1-12,
XP002205767 cited in the application**

EP 1 509 879 B1

**Description**

The invention relates to a method of visually encrypting a graphical message in which a first share is produced based on the graphical message and a key sequence. The invention further relates to a computer program product and to a device for visually encrypting a graphical message.

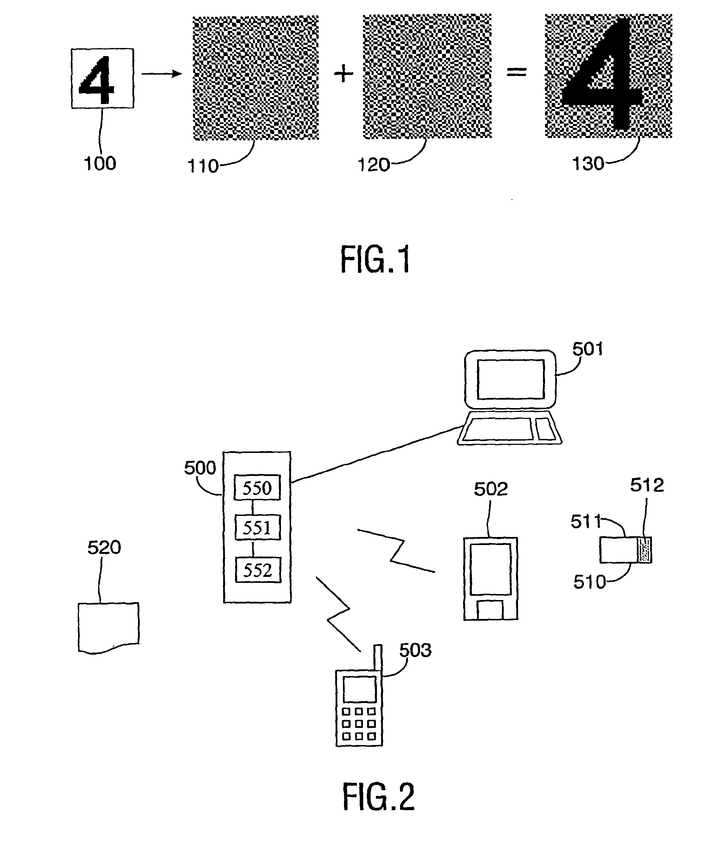

Visual cryptography (M. Naor, A. Shamir: Visual Cryptology, Eurocrypt '94, Springer-Verlag LNCS Vol.950, Springer-Verlag, 1995, pp.1-12) can briefly be described as follows. An image is split into two randomized parts, the image plus a randomization and the randomization itself. Either part contains no information on the original image because of the randomization. However, when both parts are physically overlaid the original image is reconstructed. An example is given in Fig. 1: original image 100 is split into shares 110 (image plus randomization) and 120 (randomization), which when overlaid result in reconstructed image 130.

If the two parts do not fit together, no information on the original image is revealed and a random image is produced. Therefore if two parties want to communicate using visual cryptography, they have to share the randomization. A basic implementation would be to give a receiving party a transparency containing the randomization. The sender would then use this randomization to randomize the original message, and transmits the randomized message as the share 110 to the receiver, on a transparency or by any other means. The receiver puts the two transparencies on top of each other and recovers the message. This scheme can be compared to a one-time pad.

The above scheme suffers from several disadvantages. First, in order to show the same level of detail in the reconstructed image 130, the shares 110, 120 require a four times higher resolution than the original image 100. This makes the reconstructed image 130 four times as large as the original image 100.

Further, the contrast and brightness of the reconstructed image 130 is severely reduced compared to the contrast and brightness of the original image 100. This is due to the fact that white pixels in the original image 100 turn into a pattern of black and white pixels in the reconstructed image 130. This also causes a small distortion at the edges of the parts that were black in the original image 100. These effects can be seen clearly in Fig. 1.

A more flexible implementation is obtained when using two display screens, e.g. two LCD screens. A first screen displays the image plus randomization and a second screen displays the randomization itself. If the screens are put on top of each other, the reconstructed image appears. International patent application WO03/067797 published on 14 August 2003 describes a device capable of reconstructing graphical messages produced using visual cryptography. This device makes use of the polarization rotating effect of liquid crystal cells in a liquid crystal display.

After receiving a sequence of information units, preferably a sequence of binary values, the sequence is rendered on the first liquid crystal display by activating or not activating cells in the liquid crystal layer. No processing or decrypting step is necessary before any displaying takes place; the information units are displayed as they are received. On a second display another pattern is displayed, which is generated based entirely on a key sequence.

Reconstruction of the image is performed by superimposing the first and second displays in the correct alignment, so that the user can see the reconstructed graphical message. The reconstruction is performed directly by the human eye and not by a device which might be compromised. This makes the use of visual cryptography to communicate secret information more secure.

Polarization filters only let light through with a particular polarization. Normally a liquid crystal cell rotates the polarization of the light that passes through it over a certain angle. If a sufficient voltage is applied to the cell, no rotation takes place. This is referred to as "activating" that cell. Light will not be visible if the total rotation of the polarization of the incoming light by the two superimposed liquid crystal layers is perpendicular to the polarization direction of the second polarization filter. A similar system is described in FR2812959.

In classic visual cryptography systems, as explained above, every pixel in a source graphic was mapped to two or more pixels in the reconstructed graphic. Also, white pixels were mapped to black-and-white patterns, reducing the sharpness of the reconstructed image. This makes messages in such images harder to read. However, according to the above patent application only one cell, and hence one output pixel, is necessary for every input pixel. This maintains the sharpness and clarity of the original image in the reconstruction.

The setup according to this patent application behaves like an exclusive-or (XOR). When the rotation state of two corresponding liquid crystal cells is equal (both 0 or 90 degrees), the pixel in the reconstructed image will be white. When the states are different, the corresponding reconstructed pixel will be black. This behavior can be summarized for individual pixels in the reconstruction 130 in a truth table:

| Share 110 | Share 120 | Reconstruction 130 |
|:---:|:---:|:---:|
| R | R | W |
| R | S | B |
| S | R | B |

(continued)

| Share 110 | Share 120 | Reconstruction 130 |
|-----------|-----------|---------------------|
| S | S | W |

In this table, an 'R' denotes rotation of the polarization (preferably over 90 degrees, although this depends on the implementation), and an 'S' denotes no rotation. 'B' and 'W' denote black and white pixels in the reconstructed image, respectively.

One of the applications of visual cryptography is authenticity of the reconstructed image: if an adversary does not know the share 120, he should not be able to create a sensible message in the reconstructed image 130. Therefore, if a user sees a sensible message, he should be sure the share 110 was sent by someone who knew the share 120.

It is an object of the invention to provide a method according to the afores which hampers an adversary in creating ostensibly authentic messages in the reconstructed image.

This object is achieved according to the invention in a method comprising inserting a filler in a monochromatic area of the graphical message before producing the first share. The invention is based on the insight that the adversary can display information in the reconstructed image by inverting pixels in share 110. We explain how this can be done.

To ease notation we represent a share (see Fig. 1) by a string of 'R' and 'S' and a reconstructed or original image by strings of 'B' and 'W'. Assume that a trusted party wants to send an image of three by four pixels, knowing that the receiver has a (random) share 120 which looks like RSSRSRSRSRRS. The image is represented textually as WWWWBBBBWWWW. Following the above table, the trusted party will then construct the share 110 as RSSRRSRSSRRS. This can be summarized as follows:

| Pixel number | 1 | 2 | 3 | 4 | 5 | 6 | 7 | 8 | 9 | 10 | 11 | 12 |
|--------------|---|---|---|---|---|---|---|---|---|----|----|----|
| Original image 100 | W | W | W | W | B | B | B | B | W | W | W | W |
| Share 110 | R | S | S | R | R | S | R | S | S | R | R | S |
| Share 120 | R | S | S | R | S | R | S | R | S | R | R | S |
| Reconstructed image 130 | W | W | W | W | B | B | B | B | W | W | W | W |

The adversary, however, can manipulate the share 110, as this share 110 is displayed on a screen under the control of the adversary. From the properties of an XOR operation it follows that if he inverts entries in the share 110 (from 'S' to 'R' or vice versa), the corresponding pixels in the reconstructed image 130 will be inverted too. If in the example above the adversary inverts pixels 2 and 3 in the share 110, the resulting pixels in the reconstructed image 130 will turn from 'W' to 'B', resulting in a black shape in a white area.

The same is true for white shapes in black areas. In effect, the adversary's images appear black-on-white and white-on-black. This means that if the original image contains large monochromatic (single color) areas, the adversary can construct sensible messages in the reconstructed image 130. An observer of the thusly manipulated reconstructed image 130 will not be able to tell the messages constructed by the adversary from messages present in the original image 100.

Note that in classical visual cryptography, inverting pixels is not even required for an adversary who wants to display information in the reconstructed image: a non-encrypted image inserted in the share 110 by an adversary will show up in the reconstructed image 130. This shows that the problem exists both with classical visual cryptography and with visual cryptography based on the polarization rotation effect of liquid crystal displays, as the inventors have realized. The problem is overcome in both cases by the present invention.

These and other aspects of the invention will be apparent from and elucidated with reference to the embodiments shown in the drawings, in which:

Fig. 1 shows an original image, two shares obtained by visually encrypting the original image and a reconstructed image obtained by superimposing the two shares;
Fig. 2 schematically shows a system comprising a server and several clients;
Fig. 3 schematically illustrates the operations by the server to visually encrypt a graphical message before transmission to the client device;
Figs. 4A-C schematically illustrate the effect of inserting the filler;
Figs. 5A, 5B schematically illustrate the effect of inserting the filler in another embodiment; and
Figs. 6A, 6B and 6C schematically illustrate the effect of inserting the filler in yet another embodiment.

Throughout the figures, same reference numerals indicate similar or corresponding features. Some of the features indicated in the drawings are typically implemented in software, and as such represent software entities, such as software modules or objects.

Fig. 2 schematically shows a system according to the invention, comprising a server 500 and several clients 501, 502, 503. While the clients 501-503 are embodied here as a laptop computer 501, a palmtop computer 502 and a mobile phone 503, they can in fact be realized as any kind of device, as long as the device is able to interactively communicate with the server 500 and is able to render graphical images on an LCD screen. The communication can take place over a wire, such as is the case with the laptop 501, or wirelessly like with the palmtop computer 502 and the mobile phone 503. A network such as the Internet or a phone network could interconnect the server 500 and any of the clients 501-503.

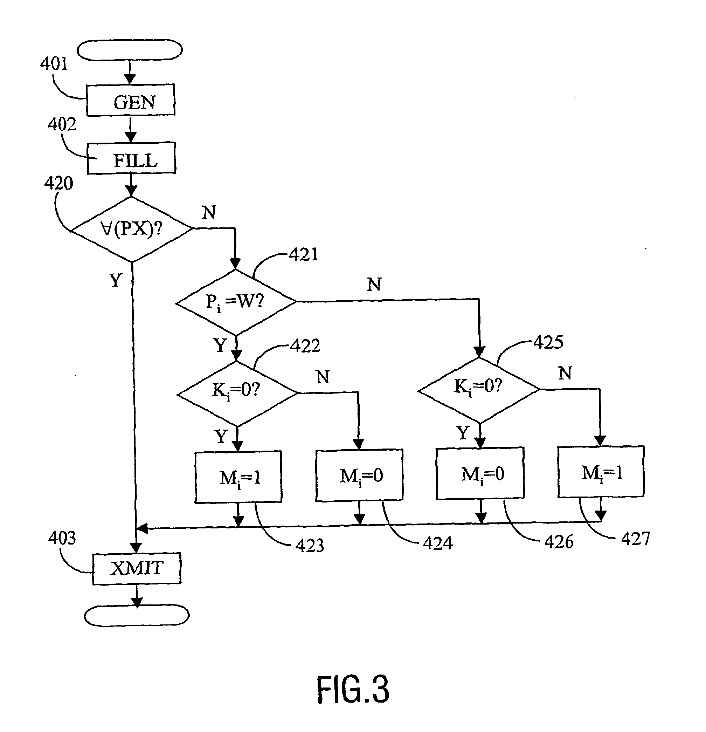

The server 500 comprises an image generating module 550 which generates an image 520 representing a message that needs to be communicated to the operator of the client 501. The image 520 will be encoded by encrypting module 551 using visual cryptography before transmission, as will become apparent below with reference to Fig. 3. Before visually encrypting the image 520, a filling module 552 inserts a filler in one or more monochromatic areas of the image 520.

Also shown in Fig. 2 is a personal decryption device 510. This device 510 is personal to a user and should be guarded well, as it is to be used to decrypt visually encoded messages sent by the server 500 to any of the clients 501-503. Anyone who gains physical control over the decryption device 510 can read all visually encrypted messages intended for the user. To add some extra security, entering a password or Personal Identification Number (PIN) could be required before activation of the decryption device 510. The device 510 could also be provided with a fingerprint reader, or be equipped to recognize a voice command uttered by its rightful owner.

The decryption device 510 comprises a display 511, preferably realized as an LCD screen. The decryption device 510 is equipped with hardware and/or software modules 512 capable of performing the necessary cryptographic operations. This could be realized e.g. using a processor and a memory comprising the software. The construction and operation of the decryption device 510 is described extensively in the previously mentioned European patent application. For reasons of brevity, this description will not be repeated here.

Fig. 3 schematically illustrates the operations by the server 500 to visually encrypt the image 520 before transmission to the client 501. At step 401, the image generating module 550 generates the image 520 representing a message to be transmitted to the client 501. This image 520 can simply be a graphical representation of a textual message, but might also comprise images.

After the image 520 has been generated, the filling module 552 in step 402 identifies one or more relatively large monochromatic areas in the image 520 and inserts a filler in the identified area or areas. As explained above, the presence of such areas could be exploited by an adversary to construct sensible messages which, upon reconstruction, are presented to the user. Although the construction as such cannot be prevented, the insertion of a filler makes it possible for the user to easily identify these messages as not authentic.

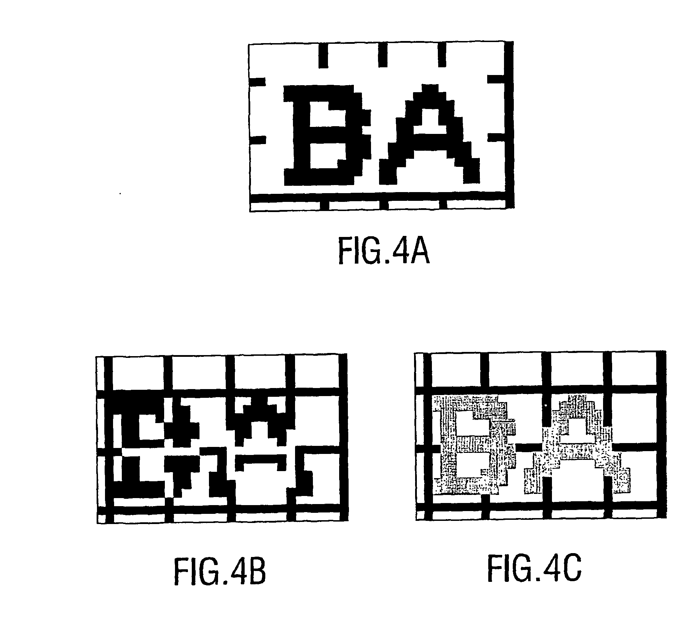

The filler preferably represents a regularly spaced grid. This has the advantage that it is very easy to generate, and any messages created by the adversary clearly stand out, as will be explained below with reference to Figs. 4A-C. It is now very important that the adversary has absolutely no knowledge about the grid. In particular an adversary should not have a clue about the distance between gridlines and the location and thickness of gridlines. Care should be taken to properly design the grid(s) to be used, since the range of possible grids can be limited by aspects like visibility (the authentic text must still be very well visible) and by the fact that displays are small (which is the case on handheld devices).

Alternatively, the filler may comprise pixels distributed over the area in a pseudo-random fashion. Such a random pattern has the advantage that it is very hard to predict if generated correctly. This makes it very difficult for an attacker to design sensible messages that incorporate the filler, or that work around the filler.

The filler could also comprise a predetermined graphical image, such as a logo, a generic warning message or a decorative illustration. This has the advantage that it does not distract the user from the real information contents of the graphical message and adds to the aesthetic quality of the reconstructed image 130. Further, such a graphical image can be constructed in any shape or form, making it possible to insert one for any given monochromatic area. Another option is a small logo that appears 'tiled' at the background of the message.

Many other ways to generate a filler are of course also possible. The filler can be inserted by simply overlaying it upon the monochromatic areas, or through other means. The possibilities of a substitution attack by an adversary can be further reduced when using a filler in multiple colors or grayscales.

In step 420, the encrypting module 551 generates a bit sequence to be transmitted to the client device 501 by examining every pixel in the image 520 and choosing an appropriate bit. First, the pixel is examined in step 421 to determine its color. The images generated in step 401 can be in black and white, in grayscale or in color. However, in this embodiment it is assumed that the images comprise only two colors, namely black and white. If the color of the pixel is found to be white, the method proceeds to step 422. Otherwise, the method proceeds to step 425.

As noted above, the decryption device 510 holds a key sequence in storage area 512. The server 500 holds a copy of this key sequence. Usually the server 500 knows in advance which user is operating the client device 501, and then can simply look up the appropriate key sequence. The encrypting module 551 may also want to use a particular key sequence without knowing in advance which user is operating the client device 501. This ensures that only the person owning the personal decryption device with that particular key sequence can read the information contained in the message to be transmitted to the client device 501.

Every bit in the key sequence is to be used only once. To this end, usually a pointer indicating the current position in the key sequence is maintained. This current position is referred to as the $i^{th}$ position. After using a bit from the key sequence, the pointer is increased by 1. If all the bits from the key sequence have been used, the key sequence must be replaced, or for example a hash function or symmetric encryption function should be applied to it to obtain a new key sequence. It is observed that the security of the system for a large part depends on the quality of the pseudo-random number generator used for generating key sequences.

In step 422, the $i^{th}$ bit of the key sequence ($K_i$) is examined to determine whether it is '0' or '1'. If it is '0', then at step 423 the corresponding $i^{th}$ bit of the sequence is chosen to be '1'. If it is '1', then at step 424 the $i^{th}$ bit is chosen to be '0'.

Similarly, if the pixel is black, then at step 425 the $i^{th}$ bit of the key sequence is also examined to determine whether it is '0' or '1'. If it is '0', then at step 426 the $i^{th}$ bit is chosen to be '0'. If it is '1', then at step 427 the $i^{th}$ bit is chosen to be '1'.

It is observed that the above steps can be implemented very efficiently by representing white pixels as '1' and black pixels as '0'. The $i^{th}$ bit of the message ($M_i$) can then easily be computed using the XOR operator: $M_i = P_i$ xor $K_i$, where $M_i$ is the $i^{th}$ bit in the bit sequence to be transmitted, $P_i$ is the $i^{th}$ pixel in the image 520, and $K_i$ is the $i^{th}$ bit in the key sequence.

When all pixels have been processed, the bit sequence is transmitted in step 403 to the client device 501. Such transmissions are straightfoward to implement and will not be elaborated upon here. Note that it is not necessary to protect this transmission by e.g. encrypting the bit sequence before transmitting it. Because of the process used to choose these bits, it is impossible for an eavesdropper to recover the image 520 by using only the bit sequence.

In Figs. 4A-C the effect of inserting the filler is illustrated. In these Figures, a rectangular grid has been used as the filler. The message that appears upon reconstruction, as shown, is in all three cases the letters "BA". In Fig. 4A, the message originated from the server 500, i.e. a trusted party. In Fig. 4B, the message was created by an adversary using the method as explained earlier (pixel inversion).

If the message originated from the trusted party, the grid lines will not be visible in the area where the message "BA" is shown (Fig. 4A), but the grid lines will be visible if the message was inserted by the adversary (Fig. 4B). The user can distinguish the message from the adversary and the message from the server 500 by the fact that the grid lines show through the untrusted letters and then abort further communication.

If the adversary would toggle the pixels in the share 110 at a sufficiently high rate, the message "BA" would appear in gray which can also be observed easily by a human receiver, as shown in Fig. 4C. Authentic messages appear in black and white, and so are easily distinguished from gray messages.

International patent application WO 2004/023694 published on 18 March 2004 describes a visual cryptography system based on liquid crystal displays. In this enhancement for each pixel of the message sequence, said pixel having a normalized intensity I, a total rotation $\alpha$ which results in a liquid crystal display in a pixel with substantially the intensity I is determined. The key sequence contains arbitrary rotations. The difference between the total rotation a and a corresponding rotation in the key sequence is output as an element of the encoded sequence.

For convenience it is assumed that $\underline{k}$ distinguishable colors or grayscale values can be displayed on the device 501 and personal decryption device 510. In order to make transmitted text messages in such a system less vulnerable to substitution attacks, the original image should be constructed with a colorful filler, preferably embodied as a background for the original message. In particular a colorful image with lots of color transitions can be chosen as a background. The actual text characters must then be printed in one plain color on top of this background. This embodiment is illustrated in Fig. 5A, illustrating the text "Hello" on a filler comprising a background with regions having mutually different grayscale values.

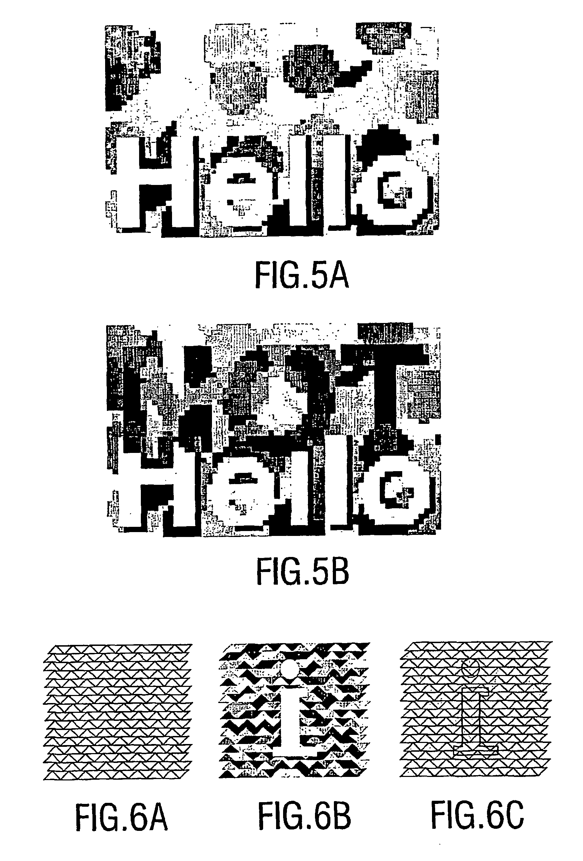

Authentic text messages can now be recognized by the fact that they are visible in a plain color. An adversary could try to add a sensible text message (i.e. perform a substitution attack) by manipulating the rotation angle of certain elements of the message sequence with a constant factor. This causes pixels with different grayscale values or colors to appear on the device 501. However, since the background is highly colorful with lots of transitions, the text added by an adversary will (with high probability) consist of many different colors due to color transitions in the background. As an example, Fig. 5B shows the same picture as in Fig. 5A where an adversary has tried to add some text (here shown as "NOT").

Text added by the adversary will only be clearly visible (in a plain color) in regions where there are no color transitions. Since the adversary does not know the background image, it is quite hard for him to succeed in adding uniform colored text. It is noted that in order to make this message authentication more secure, every user -or better yet, every message- must have a different colored filler. Even more security is obtained when the filler image changes every new message.

Denote with $\underline{t}$ the maximum number of adjacent background pixels of the same (uniform) color. Now assume that an adversary wants to add a text message that consists of $\underline{c}$ times $\underline{t}$ pixels. Furthermore it is assumed that an image consists of $\underline{k}$ distinguishable colors. If the adversary only knows the locations of color transitions in the picture but not what color is used, his chance of adding a uniformly colored message is:

$$P_a = \left(\frac{1}{k\text{-}1}\right)^{c\text{-}1}$$

In practice, the adversary will not know the exact locations of the color transitions and will therefore have even less probability of adding uniformly colored messages and thus perform a substitution attack.

An additional rule for authentic text could be the fact that all (authentic) text in the image should have the same (uniform) color. In this case the adversary has even little chance of executing a successful substitution attack since the text he adds should be of a specific color (namely the same color as the authentic text). In this case the probability of a successful substitution attack is:

$$P_a = \frac{1}{k}\left(\frac{1}{k\text{-}1}\right)^{c\text{-}1}$$

These formulas show that in order to increase security, more colors can be added in the image. Note that it is assumed that the user must be able to view the difference between all the colors involved. A second method of improving the security is using background images with more frequent color transitions, i.e. lowering the factor $\underline{t}$. If the number of pixels the adversary wants to add remains constant, this will lead to a higher $\underline{c}$ factor and thus a lower chance of a successful substitution attack.

The situation in which there is a color transition every pixel, i.e. $\underline{t}$=1, should preferably be avoided altogether. In this case the background picture is totally random and gives the adversary the opportunity to erase authentic text without notice to the user. If he knows the location of an authentic text character in the visually encrypted image, he can randomly adjust the polarization rotations in the share at this location, resulting in an erasure of the text character.

Yet another embodiment is illustrated in Figs. 6A, 6B and 6C. In this embodiment the filler comprises a series of 'tiles', here in the form of triangles. In general, any pattern can be used here. Preferably the elements of the pattern are colored with a pseudo-randomly chosen color or grayscale value. Fig. 6B illustrates how the letter "i" is superimposed upon such a filler as part of an authentic message. The recipient can determine the authenticity because the letter is clearly distinguishable from the filler. In Fig. 6C a reconstructed image is illustrated in which an adversary has attempted to insert this same letter "i" in the original image. As can be seen in Fig. 6C, the letter is now hard to distinguish from the tiles in the background.

It should be noted that the above-mentioned embodiments illustrate rather than limit the invention, and that those skilled in the art will be able to design many alternative embodiments without departing from the scope of the appended claims. The invention can be used in any kind of device in which a secure communication from a server to a client and/or vice versa is necessary. Client devices can be embodied as personal computers, laptops, mobile phones, palmtop computers, automated teller machines, public Internet access terminals, or in fact any client device that is not completely trusted by its user to not contain any malicious software or hardware.

There are many ways to further reduce the severity of a substitution attack. For example, every character in the message can be depicted in one single uniform randomly chosen color using a randomly chosen font type. The message can be presented in a different location in every image. The less information an attacker has about where message elements occur, the more secure the system is against substitution attacks.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware.

**Claims**

1. A method of visually encrypting (420) a graphical message, in which a first share (110) is produced (401) based on the graphical message and a key sequence, the method comprising inserting (402) a filler in a monochromatic area of the graphical message before producing the first share (110).

2. The method as claimed in claim 1, in which the filler represents a regularly spaced grid.

3. The method as claimed in claim 1, in which the filler comprises pixels distributed over the area in a pseudo-random fashion.

4. The method as claimed in claim 1, in which the filler comprises a predetermined graphical image.

5. The method as claimed in claim 1, in which the filler comprises a plurality of areas of mutually differently colors.

6. The method as claimed in claim 5, in which all textual content of the graphical message is presented in a single color.

7. The method as claimed in claim 1, in which the filler comprises a plurality of areas of mutually different grayscales.

8. The method as claimed in claim 1, in which different fillers are inserted for different graphical messages.

9. A computer program product for causing a processor to execute the method of claim 1.

10. A device for visually encrypting a graphical message, comprising encrypting means (551) for producing a first share (110) based on the graphical message and a key sequence, and filling means (552) for inserting a filler in a monochromatic area of the graphical message before producing the first share (110).


**Patentansprüche**

1. Verfahren zur visuellen Verschlüsselung (420) einer graphischen Nachricht, wobei ein erster Anteil (110) auf Basis der graphischen Nachricht und einer Schlüsselsequenz erzeugt (401) wird, wobei das Verfahren den nachfolgenden Verfahrensschritt umfasst: das Einfügen (402) eines Füllfeldes in ein monochromatisches Gebiet der graphischen Nachricht vor der Erzeugung des ersten Anteils (110).

2. Verfahren nach Anspruch 1, wobei das Füllfeld ein Gitter mit regelmäßigen Abständen darstellt.

3. Verfahren nach Anspruch 1, wobei das Füllfeld Pixel aufweist, die auf eine pseudobeliebige Art und Weise über das Gebiet verteilt sind.

4. Verfahren nach Anspruch 1, wobei das Füllfeld ein vorbestimmtes graphisches Bild aufweist.

5. Verfahren nach Anspruch 1, wobei das Füllfeld eine Anzahl untereinander verschieden gefärbte Bilder aufweist.

6. Verfahren nach Anspruch 5, wobei der ganze textliche Content der graphischen Nachricht in einer einzigen Farbe dargestellt wird.

7. Verfahren nach Anspruch 1, wobei das Füllfeld eine Anzahl Gebiete untereinander verschiedener Grauskalen aufweist.

8. Verfahren nach Anspruch 1, wobei verschiedene Füllfelder für verschiedene graphische Nachrichten eingefügt werden.

9. Computerprogrammprodukt um dafür zu sorgen, dass ein Prozessor das Verfahren nach Anspruch 1 durchführt.

10. Anordnung zur visuellen Verschlüsselung einer graphischen Nachricht mit Verschlüsselungsmitteln (551) zum Erzeugen eines ersten Anteils (110) auf Basis einer graphischen Nachricht und einer Schlüsselsequenz, und mit Füllmitteln (552) zum Einfügen eines Füllfeldes in ein monochromatisches Gebiet der graphischen Nachricht vor der Erzeugung des ersten Anteils (110).

**Revendications**

1. Procédé de cryptage visuel (420) d'une image graphique, dans lequel une première part (110) est produite (401) sur la base du message graphique et d'une séquence clé, le procédé comprenant l'insertion (402) d'un remplissage dans une zone monochromatique du message graphique avant de produire la première part (110)

2. Procédé suivant la revendication 1, dans lequel le remplissage représente une grille à espacement régulier.

3. Procédé suivant la revendication 1, dans lequel le remplissage comprend des pixels répartis sur la zone d'une manière pseudo-aléatoire.

4. Procédé suivant la revendication 1, dans lequel le remplissage comprend une image graphique prédéterminée.

5. Procédé suivant la revendication 1, dans lequel le remplissage comprend une pluralité de zones de couleurs mutuellement différentes.

6. Procédé suivant la revendication 5, dans lequel tout le contenu textuel du message graphique est présenté en une seule couleur.

7. Procédé suivant la revendication 1, dans lequel le remplissage comprend une pluralité de zones de demi-teintes mutuellement différentes.

8. Procédé suivant la revendication 1, dans lequel différents remplissages sont insérés pour différents messages graphiques.

9. Progiciel pour amener un processeur à exécuter le procédé suivant la revendication 1.

10. Dispositif pour crypter visuellement un message graphique, comprenant un moyen de cryptage (551) destiné à produire une première part (110) basée sur le message graphique et une séquence clé, et un moyen de remplissage (552) pour insérer un remplissage dans une zone monochromatique du message graphique avant de produire la première part (110).

FIG.1

FIG.2

FIG.3

FIG.4A

FIG.4B

FIG.4C

FIG.5A

FIG.5B

FIG.6A

FIG.6B

FIG.6C